# EUROPEAN PATENT SPECIFICATION

(11) **EP 0 922 389 B1**
(45) Date of publication and mention of the grant of the patent: **28.08.2002**
(21) Application number: 98310093.4
(22) Date of filing: 09.12.1998
(51) Int. Cl.: A21D 2/18, A21D 13/00, A21D 13/08

(54) **Process for producing flour-containing foods for microwave oven heating**
Verfahren zur Herstellung von Mehl enthaltenden Nahrungsprodukten für Mikrowellenofen
Procédé de production de produits alimentaires contenant de la farine pour fours à micro-ondes

(30) Priority: 11.12.1997 JP 34107397; 11.12.1997 JP 34107497
(43) Date of publication of application: 16.06.1999
(73) Proprietor: Fuji Oil Co., Ltd., Osaka-shi, Osaka 542-0086 (JP)
(72) Inventor: Narimatsu, Hiroki, c/o Fuji Oil Co.,Ltd., Izumisano-shi, Osaka (JP); Kaji, Tomoko, c/o Fuji Oil Co.,Ltd., Izumisano-shi, Osaka (JP); Nakamura, Akihiro, c/o Fuji Oil Co.,Ltd., Izumisano-shi, Osaka (JP); Sato, Yoko, c/o Fuji Oil Co.,Ltd., Izumisano-shi, Osaka (JP); Maeda, Hirokazu, c/o Fuji Oil Co.,Ltd., Izumisano-shi, Osaka (JP)
(74) Representative: Hale, Stephen Geoffrey

(56) References cited:
- EP-A- 0 301 440
- EP-A- 0 521 707
- EP-A- 0 776 604
- PATENT ABSTRACTS OF JAPAN vol. 096, no. 003, 29 March 1996 & JP 07 298826 A (FUJI OIL CO LTD), 14 November 1995

## Description

### BACKGROUND OF THE INVENTION

### 1. Field of the Invention

The present invention relates to a process for producing flour-containing foods for microwave oven heating.

### 2. Description of the Related Art

Traditional flour-containing foods such as Chinese buns, pancakes and the like are distributed in refrigerated or frozen form after first being steamed or baked, and upon purchase by consumers they are usually heated in microwave ovens before eating. A drawback, however, is that when such foods are heated in microwave ovens they not only become very difficult to chew and have a mushy feel, but with cooling they undergo rapid hardening and shrinkage, producing wrinkles on the surface. Particularly in the case of pancake products which are cooked on frying pans, the surface (crust) portion which contacts the frying pan ends up with a mushy feel. These drawbacks also occur with various bread products such as steamed bread and the like. One method employed to eliminate such problems is disclosed in Japanese Unexamined Patent Publication No. 4-287669, as a frozen Chinese bun for microwave oven heating, whereby agar jelly is mixed with the meat in the Chinese bun. Also, Japanese Unexamined Patent Publication No. 3-22941 proposes a method of adding vegetable fiber powder to the dough, and Japanese Unexamined Patent Publication No. 7-147947 proposes a method of including heat and moisture-treated flour.

These methods, however, have a limited improving effect, and especially in the case of Japanese Unexamined Patent Publication No. 4-287669 which involves modification of the composition of the Chinese bun and addition of jelly, etc., the original taste and feel is changed upon microwave oven heating despite some improvement in the quality of the Chinese bun. Disadvantages from the complexity of preparation also remain, and even with relative satisfaction immediately after the microwave oven heating, no attention is given to the gradual hardness which results with cooling whereby the subsequent feel and appearance changes with time; consequently, as of the current time the problems described above have not been adequately solved.

On the other hand, JP 07 298 826A discloses a souffle cake reheatable by microwaving, prepared by admixing the dough with a water-soluble hemicellulose in combination with a mono-glyceride or an organic acid monoglyceride.

### SUMMARY OF THE INVENTION

The present invention provides a process for producing flour-containing foods for microwave oven heating which have a satisfactory appearance, taste and feel, in order to overcome the disadvantages of mouth feel, surface wrinkling and hardening and shrinking with time which occur after microwave oven heating.

As a result of diligent research directed toward solving the aforementioned problems, the present inventors have found that addition of water-soluble hemicellulose during the production of flour-containing foods for microwave oven heating can improve the chewablity and hardening of such foods with time after microwave oven heating, without altering the original taste or feel of the food. The present invention has been completed on the basis of this finding.

In other words, the present invention relates to a process for producing flour-containing foods for microwave oven heating which comprises adding water-soluble hemicellulose to raw dough used for flour-containing food, steaming or baking it according to a common (or conventional) method, and then cooling or freezing it.

### DESCRIPTION OF THE PREFERRED EMBODIMENTS

The water-soluble hemicellulose according to the invention is a product derived from oily seeds or grains, particularly a bean-derived product, and more preferably a soybean-derived product.

The water-soluble hemicellulose has an average molecular weight (the value determined by the limiting viscosity method wherein the viscosity of a 0.1 M NaNO₃ solution is measured using standard pullulan (product of Showa Denko, KK.) of 50,000 to 1 million, or preferably 100,000 to 400,000, and is a plant-derived hemicellulose which is soluble in water.

Suitable water-soluble hemicelluloses are those comprising rhamnose, fucose, arabinose, xylose, galactose, glucose and uronic acid as constituent saccharides. Depending on the average molecular weight or plant type, however, it may lack either or both rhamnose or fucose, or may contain mannose and fructose. Uronic acid was measured by the Blumenkrantz method and the neutral sugars were measured by the GLC method after alditol acetation.

The water-soluble hemicellulose is either obtained by water extraction from a hemicellulose-containing starting material or, if necessary, heat elution under acid or alkali conditions, or it may be eluted by decomposition with an enzyme. The following is an example of a method of producing water-soluble hemicellulose.

First, suitable starting materials to be used include plant materials, for example, the husks of oily seeds of soybean, palm, coconut, corn or cottonseed with the oil and protein removed, and lees from grains such as rice or wheat with the starch removed. If the starting material is soybean, the okara (bean-curd refuse) a byproduct from preparation of tofu (bean curd) and soybean milk or separated soybean protein may be used.

These starting materials may be subjected to heat decomposition at a temperature preferably of from 80°C to 130°C, and more preferably from 100°C to 130°C, under either acidic or alkali conditions but preferably at a pH near the isoelectric point of each protein, and after fractionation of the water-soluble fraction, it may be dried directly or subjected to activated carbon treatment, resin adsorption treatment or ethanol precipitation to remove the hydrophobic substances or low molecular substances, and then dried to yield the water-soluble hemicellulose.

The water-soluble hemicellulose can provide an effect by being added to the flour-containing food for microwave oven heating in an amount of 0.1-5 parts by weight, and preferably 0.3-2.0 parts by weight to 100 parts by weight of the flour in the raw material. A satisfactory effect may not be obtained below this range, and the feel and taste of the food may be impaired at above this range.

The food product of the invention is a food prepared from flour as the starting material, and is particularly useful for foods which are sold and distributed in refrigerated or frozen areas; examples include Chinese buns such as pork buns, bean-jam buns, pizza buns, curry buns and similar types of steamed buns, as well as pancakes and breads such as steamed breads. Such foods are refrigerated or frozen after first being steamed or baked, and before eating they are heated in a microwave oven as pre-steamed or pre-cooked foods.

For production of these foods, the water-soluble hemicellulose may be preadded to the flour material, or added and mixed with another raw material and included in the production of the food according to the normal production method.

Embodiments of the invention will now be introduced through examples which, however, are only exemplary and are not intended to restrict the spirit of the invention. Preparation of water-soluble hemicellulose

To raw okara obtained from production of separated soybean protein there was added a 2-fold amount of water, and after adjustment to pH 4.5 with hydrochloric acid, the mixture was hydrolyzed at 120°C for 1.5 hours. After cooling, the mixture was centrifuged (10,000 G x 30 minutes) and the supernatant and precipitate portion were separated. The separated precipitate portion was washed with an equivalent weight of water, and the supernatant obtained by subsequent centrifugation was combined with the previous supernatant, treated with an active carbon column and dried to obtain water-soluble hemicellulose. The properties were as follows.

| Water-soluble hemicellulose composition (wt%) | |
|---|---|
| Water | 5.71 |
| Crude protein | 1.93 |
| Crude ash | 5.29 |
| Carbohydrate content | 87.07 |
| Average molecular weight | 178,000 |

| Water-soluble hemicellulose sugar composition (wt%) | |
|---|---|
| Uronic acid | 20.4 |
| Rhamnose | 1.6 |
| Fucose | 2.7 |
| Arabinose | 19.9 |
| Xylose | 6.4 |
| Galactose | 47.3 |
| Glucose | 1.8 |

Chinese buns were prepared using the following compositions and process.

| Composition (parts by weight) | | | | |
|---|---|---|---|---|
| Materials | Example 1 | Example 2 | Comparative Example 1 | Comparative Example 2 |
| Hard wheat flour | 40 | 40 | 40 | 40 |
| Soft wheat flour | 60 | 60 | 60 | 60 |
| Sugar | 15 | 15 | 15 | 15 |
| Salt | 0.5 | 0.5 | 0.5 | 0.5 |
| Baking powder | 1.0 | 1.0 | 1.0 | 1.0 |
| Yeast | 2.5 | 2.5 | 2.5 | 2.5 |
| Margarine | 8 | 8 | 8 | 8 |
| Water | 54 | 54 | 54 | 54 |
| Water-soluble hemicellulose | 1.0 | 0.5 | 0.08 | -- |

### Production process for Chinese buns

- Mixing: 5 minutes at low speed, 1 minute at medium speed (kneading temperature: 26°C)
- Mixing by the all-in one mixing method
- Fermentation chamber temperature/humidity: 28°C/70%
- Floor time: 20 minutes
- Separated weight: 60 g
- Bench time: 10 minutes
- Shaping, filling: Chinese ingredients, 30 g
- Drier temperature/humidity: 35°C/60%
- Steaming time: 12 minutes
- Steaming temperature: 103°C

The condition of the dough during the process was satisfactory with addition of the water-soluble hemicellulose.

Chinese buns were prepared using the aforementioned compositions and process, and after freezing and storage for 10 days, they were heated in a microwave oven. The microwave oven heating conditions were 500 W for 4 minutes, 30 seconds, and the mouth feel was evaluated 10 minutes after the heating.

### Evaluation

| Evaluated property | Ex. 1 | Ex. 2 | Comp. Ex. 1 | Comp. Ex. 2 |
|---|---|---|---|---|
| State of dough prior to baking | 4 | 4 | 4 | 4 |

| State after microwave oven cooking | | | | |
|---|---|---|---|---|
| Appearance (shrinkage (wrinkling)) | 4 | 4 | 4 | 4 |
| Feel (crispness, chewable feel) | 5 | 4 | 3 | 3 |
| Taste | 4 | 4 | 4 | 4 |
| Change with time (hardness after 10 minutes) | 5 | 4 | 2 | 2 |
| Note) 5: very good, 4: good, 3: normal, 2: poor, 1: very poor | | | | |

### Comparative Example 3

Chinese buns with the following composition were prepared and evaluated in the same manner as Example 1, but using water-insoluble vegetable fiber instead of water-soluble hemicellulose.

### Chinese bun composition (parts by weight)

| Materials | Example 1 | Comparative Example 1 | Comparative Example 3 |
|---|---|---|---|
| Hard wheat flour | 40 | 40 | 40 |
| Soft wheat flour | 60 | 60 | 60 |
| Sugar | 15 | 15 | 15 |
| Salt | 0.5 | 0.5 | 0.5 |
| Baking powder | 1.0 | 1.0 | 1.0 |
| Yeast | 2.5 | 2.5 | 2.5 |
| Margarine | 8 | 8 | 8 |
| Water | 54 | 54 | 54 |
| Water-soluble | 1.0 | -- | -- |
| hemicellulose | | | |
| Vegetable fiber* | -- | -- | 1.6 |

| | | | |
|---|---|---|---|
| * Vegetable fiber: Proplus 500 N (trade name of Fuji Oils, KK.), carbohydrate content: 55.5 wt%, vegetable fiber content adjusted for a carbohydrate content equivalent to water-soluble hemicellulose (87.07%). | | | |

### Evaluation

| Evaluated property | Ex. 1 | Comp. Ex. 1 | Comp. Ex. 3 |
|---|---|---|---|
| State of dough prior to baking | 4 | 4 | 3 |

| State after microwave oven cooking | | | |
|---|---|---|---|
| Appearance (shrinkage (wrinkling)) | 4 | 4 | 4 |
| Feel (crispness, chewable feel) | 5 | 3 | 3 |
| Taste | 4 | 4 | 4 |
| Change with time (hardness after 10 minutes) | 5 | 2 | 2 |
| Note) 5: very good, 4: good, 3: normal, 2: poor, 1: very poor | | | |

As demonstrated above, the products of Examples 1 and 2 showed improvement in the appearance after microwave oven heating (presence of wrinkles due to moisture loss), mouth feel (crispness, chewable feel, etc.), taste and change with time (shrinking, hardening, etc.) compared to Comparative Examples 1-3, so that products were obtained with the desired mouth feel (crispness, chewable feel, etc.) and no hardening with time.

### Examples 3-4, Comparative Examples 4-5

Pancakes were prepared using the following compositions and process.

### Pancake composition (parts by weight)

| Materials | Ex. 3 | Ex. 4 | Comp.Ex.4 | Comp.Ex.5 |
|---|---|---|---|---|
| Soft wheat flour | 130 | 130 | 130 | 130 |
| Baking powder | 3.9 | 3.9 | 3.9 | 3.9 |
| Salt | 1.3 | 1.3 | 1.3 | 1.3 |
| Egg | 50 | 50 | 50 | 50 |
| Sugar | 20 | 20 | 20 | 20 |
| Milk | 100 | 100 | 100 | 100 |
| Butter | 10 | 10 | 10 | 10 |
| Water-soluble hemicellulose | 1.0 | 0.5 | 0.08 | -- |

### Pancake preparation process

(1) Flour, baking powder, salt and water-soluble hemicellulose are mixed together and sifted.
(2) The egg is placed in a bowl and lightly beaten, and the sugar and milk are added.
(3) The flour mix of (1) is combined with (2).
(4) The melted butter (slightly cooled) is added to (3) which had been approximately uniformly mixed.
(5) Baking conditions (NF-HMG21 hotplate by National, Inc.)
   Temperature setting: 160°C
   Dough weight: 84 g
   Top side: 4 minutes
   Bottom side: 1 minute, 30 seconds

The condition of the dough during the process was satisfactory with addition of the water-soluble hemicellulose.

Pancakes were prepared using the aforementioned compositions and process, and after freezing and storage for 10 days, they were heated in a microwave oven. The microwave oven heating conditions were 500 W for 1 minute, 30 seconds for each pancake, and the mouth feel was evaluated at 10 minutes after the heating.

### Evaluation

| Evaluated property | Ex. 3 | Ex. 4 | Comp. Ex. 4 | Comp. Ex. 5 |
|---|---|---|---|---|
| State of dough prior to baking | 4 | 4 | 4 | 4 |

| State after microwave oven cooking | | | | |
|---|---|---|---|---|
| Appearance | 4 | 4 | 4 | 4 |
| Feel (crispness, chewable feel) | 5 | 4 | 2 | 2 |
| Taste | 4 | 4 | 4 | 4 |
| Change with time (hardness after 10 minutes) | 5 | 4 | 2 | 2 |
| Note) 5: very good, 4: good, 3: normal, 2: poor, 1: very poor | | | | |

### Example 5, Comparative Example 6

Pancakes were prepared with the following composition using a commercially available pancake mix (product of Morinaga Seika, KK.)

### Composition

| Materials | Example 5 | Comp. Example 6 |
|---|---|---|
| Pancake mix | 200 g | 200 g |
| Egg | 1 egg | 1 egg |
| Milk | 150 cc | 150 cc |
| Water-soluble hemicellulose | 2 g | -- |

These compositions were used for preparation and evaluation of pancakes in the same manner as Example 3. The baking and freezing conditions were the same as in Example 3.

### Evaluation

| Evaluated property | Example 5 | Comp. Example 6 |
|---|---|---|
| State of dough prior to baking | 4 | 4 |

| State after microwave oven cooking | | |
|---|---|---|
| Appearance (shrinkage (wrinkling)) | 4 | 4 |
| Feel (crispness, chewable feel) | 5 | 2 |
| Taste | 4 | 4 |
| Change with time (hardness after 10 minutes) | 5 | 2 |
| Note) The evaluation was based on the same scale as Example 3. | | |

### Comparative Example 7

Pancakes were prepared and evaluated in the same manner as Example 5, but using insoluble vegetable fiber instead of water-soluble hemicellulose, as an addition to the following commercially available pancake mix. The pancake mix was a commercial product of Morinaga Seika, KK.

### Composition

| Materials | Example 5 | Comp. Example 7 |
|---|---|---|
| Pancake mix | 200 g | 200 g |
| Egg | 1 egg | 1 egg |
| Milk | 150 cc | 150 cc |
| Water-soluble hemicellulose | 2 g | -- |
| Insoluble vegetable fiber* | -- | 3.2 g |
| Note) The baking and freezing conditions were the same as in Example 5. | | |

| | | |
|---|---|---|
| * Insoluble vegetable fiber: Proplus 500 N (trade name of Fuji Oils, KK.), carbohydrate content: 55.5 wt%, vegetable fiber content adjusted for a carbohydrate content equivalent to water-soluble hemicellulose (87.07%). | | |

### Evaluation

| Evaluated property | Example 5 | Comp. Example 7 |
|---|---|---|
| State of dough prior to baking | 4 | 3 |

| State after microwave oven cooking | | |
|---|---|---|
| Appearance (shrinkage (wrinkling)) | 4 | 4 |
| Feel (crispness, chewable feel) | 5 | 2 |
| Taste | 4 | 4 |
| Change with time (hardness after 10 minutes) | 5 | 2 |
| Note) The evaluation was based on the same scale as Example 1. | | |

As demonstrated above, the products obtained in Examples 3-5 showed improvement in the appearance after microwave oven heating, mouth feel (crispness, chewable feel, etc.), taste and change with time (hardening, etc.) compared to Comparative Examples 4-7, so that products were obtained with a satisfactory mouth feel (crispness, chewable feel, etc.) and no alteration (hardening, etc.) with time.

Thus, according to the process of the invention, it is possible to resolve the problems of mushiness and poor chewable feel of flour-containing foods and their hardening with continued cooling, which occur when such foods have been presteamed or prebaked, refrigerated or frozen, and then heated in a microwave oven before eating; it is thus possible to prepare refrigerated or frozen flour-containing foods which have a satisfactory appearance, taste and mouth feel and yet are suitable for microwave oven heating.

## Claims

1. A process for producing a flour-containing food for microwave oven heating **characterised by** adding water-soluble hemicellulose to raw dough used for a flour-containing food, steaming or baking it according to a known method, and then cooling or freezing it.

2. A process as claimed in claim 1, **characterised in that** the water-soluble hemicellulose is added in a proportion of 0.1-5.0 parts by weight to 100 parts by weight of the flour.

3. A process as claimed in claim 1 or 2, **characterised in that** the water-soluble hemicellulose is derived from soybeans.

4. A process as claimed in any of claims 1 to 3, **characterised in that** the flour-containing food is a Chinese bun, a pancake or a bread product.

## Patentansprüche

1. Verfahren zum Herstellen von Mehl enthaltenden Nahrungsmitteln für Mikrowellenöfen, **gekennzeichnet durch** die Zugabe von wasserlöslicher Hemizellulose zu Rohteig, der als Mehl enthaltendes Nahrungsmittel dient, **durch** Dampfbehandlung oder Backen des Teigs gemäß einem bekannten Verfahren und anschließendes Abkühlen oder Gefrieren des Teigs.

2. Verfahren nach Anspruch 1, **dadurch gekennzeichnet, daß** die wasserlösliche Hemizellulose in einem Anteil von 0,1 - 5,0 Gewichtsteilen zu 100 Gewichtsteilen Mehl zugegeben wird.

3. Verfahren nach Anspruch 1 oder 2, **dadurch gekennzeichnet, daß** die wasserlösliche Hemizellulose durch Sojabohnen gewonnen wird.

4. Verfahren nach einem der Ansprüche 1 bis 3, **dadurch gekennzeichnet, daß** das Mehl enthaltende Nahrungsmittel ein chinesisches Brötchen, ein Pfannkuchen oder ein Brotprodukt ist.

## Revendications

1. Procédé de production d'un aliment à base de farine destiné à être chauffé au four à micro-ondes, **caractérisé en ce qu'**on ajoute de l'hémicellulose soluble dans l'eau dans une pâte brute employée pour un aliment à base de farine, on l'étuve et on la cuit selon un procédé connu, puis on la refroidit ou on la congèle.

2. Procédé selon la revendication 1, **caractérisé en ce que** l'hémicellulose soluble dans l'eau est ajoutée selon une proportion de 0,1 à 5,0 parties en poids pour 100 parties en poids de la farine.

3. Procédé selon la revendication 1 ou 2, **caractérisé en ce que** l'hémicellulose soluble dans l'eau est dérivée de soja.

4. Procédé selon l'une quelconque des revendications 1 à 3, **caractérisé en ce que** l'aliment à base de farine est un petit pain chinois, une crêpe ou un produit à base de pain.
